# EUROPEAN PATENT APPLICATION

(11) **EP 4 398 208 A1**
(43) Date of publication of application: **10.07.2024**
(21) Application number: 22862853.3
(22) Date of filing: 30.06.2022
(51) Int. Cl.: G07C 5/00

(54) **DATA TRANSMISSION AND PARSING METHODS, AND DATA TRANSMISSION SYSTEM**

(30) Priority: 30.08.2021 CN 202111004628
(71) Applicant: Chengdu Jouav Automation Tech Co., Ltd., Chengdu, Sichuan 610095 (CN)
(72) Inventor: LEI, Ming, Chengdu, Sichuan 610095 (CN); LIU, Hang, Chengdu, Sichuan 610095 (CN); SUN, Tingting, Chengdu, Sichuan 610095 (CN)
(74) Representative: JD&P Patent Attorneys Joanna Dargiewicz & Partners
(86) International application number: PCT/CN2022/102753
(87) International publication number: WO 2023/029712

(57) **Abstract**

The present disclosure provides a data transmission method, a data parsing method and a data transmission system. The data transmission method includes: obtaining a first image compression bitstream and metadata comprising an absolute time; encapsulating the metadata into a predefined field of the first image compression bitstream frame by frame in an absolute-time synchronization manner, and generating a second image compression bitstream comprising the metadata; and transmitting the second image compression bitstream to a synchronous data receiving end through a communication link.

## Description

This application claims a priority of the Chinese patent application No.202111004628.5 filed on August 30, 2021 and entitled "data transmission method, data parsing method and data transmission system", which is incorporated herein by reference in its entirety.

### TECHNICAL FIELD

The present disclosure relates to the field of wireless communication technology, in particular to a data transmission method, a data parsing method and a data transmission system.

### BACKGROUND

Along with the diversity of data collected by sensors, a backend data processing unit is adapted to more application scenarios, and at this time the data transmission is highly demanded. For example, during the data transmission, it is necessary to ensure the data reliability as well as synchronization between different types of data.

Currently, a data transmission method for the sensor mainly includes transmitting image information and metadata through two data links respectively, or transmitting the image information and the metadata sequentially through one data link. At this time, delay inevitably occurs between the two types of data. In addition, due to the instability of the communication link and the uncertainty of the communication quality, the synchronization between the metadata and the image information is adversely affected in the case of a packet loss. A Type of the metadata depends on a type of a device with the sensor. For example, when the device is a boat, the metadata includes Global Navigation Satellite System (GNSS) data, wind direction or course. When the device is an aircraft, the metadata includes GNSS data, height, field angle or flight attitude.

In a word, in the conventional data transmission method for the sensor, there is insufficient synchronization between different types of data.

### SUMMARY

An object of the present disclosure is to provide a data transmission method, a data parsing method and a data transmission system, so as to solve the problem in the related art where there is insufficient synchronization between different types of data in the conventional data transmission method.

In one aspect, the present disclosure provides in some embodiments a data transmission method for a synchronous data transmitting end, including: obtaining a first image compression bitstream and metadata including an absolute time; encapsulating the metadata into a predefined field of the first image compression bitstream frame by frame in an absolute-time synchronization manner, and generating a second image compression bitstream including the metadata; and transmitting the second image compression bitstream to a synchronous data receiving end through a communication link.

In a possible embodiment of the present disclosure, the obtaining the first image compression bitstream and the metadata including the absolute time includes: outputting a first control signal for collecting the first image compression bitstream and a second control signal for collecting the metadata through a same reference clock circuit, the first control signal and the second control signal having a same reference clock; and obtaining the first image compression bitstream and the metadata including the absolute time in accordance with the first control signal and the second control signal.

In a possible embodiment of the present disclosure, the encapsulating the metadata into the predefined field of the first image compression bitstream frame by frame in an absolute-time synchronization manner includes: in the case that a collection frequency of the metadata is the same as a frame rate of the first image compression bitstream, encapsulating the metadata frame by frame into an image frame of the first image compression bitstream having a same absolute time as the metadata; and in the case that the collection frequency of the metadata is different from the frame rate of the first image compression bitstream, encapsulating the metadata frame by frame into an image frame of the first image compression bitstream having an absolute time closest to the metadata.

In a possible embodiment of the present disclosure, the data transmission method further includes, prior to encapsulating the metadata into the predefined field of the first image compression bitstream frame by frame in an absolute-time synchronization manner, compressing the metadata.

In a possible embodiment of the present disclosure, the metadata at least includes GNSS positioning data.

In a possible embodiment of the present disclosure, the predefined field is a Supplemental Enhancement Information (SEI) field.

In another aspect, the present disclosure provides in some embodiments a data parsing method for a synchronous data receiving end, including: obtaining a second image compression bitstream including metadata, the second image compression bitstream being generated through the above-mentioned data transmission method; and extracting the metadata from the second image compression bitstream.

In a possible embodiment of the present disclosure, the extracting the metadata from the second image compression bitstream includes: parsing the second image compression bitstream into a plurality of image frames including the metadata in accordance with a frame start field; and extracting the metadata included in the image frames in accordance with the frame start field, and obtaining the second image compression bitstream including the image frames or a first image compression bitstream not including the metadata.

In a possible embodiment of the present disclosure, the data parsing method further includes: subsequent to extracting the metadata from the second image compression bitstream, playing a video in accordance with the first image compression bitstream or the second image compression bitstream, and performing a drawing or processing operation in accordance with information in the metadata; or transmitting the first image compression bitstream and the metadata to a data processing unit.

In yet another aspect, the present disclosure provides in some embodiments a data transmission system, including: a synchronous data transmitting end configured to generate and transmit the second image compression bitstream through the above-mentioned data transmission method; and a synchronous data receiving end configured to parse the second image compression bitstream.

According to the data transmission method in the embodiments of the present disclosure, the metadata is encapsulated into the predefined field of the first image compression bitstream frame by frame in an absolute-time synchronization manner, so as to transmit the two types of data synchronously. In addition, through the encapsulation, the receiving end extracts the metadata from the predefined field of the first image compression bitstream without any damage to the first image compression bitstream, so it is able to ensure the purity of the two types of data as well as the independence therebetween.

### BRIEF DESCRIPTION OF THE DRAWINGS

Fig. 1 is a flow chart of a data transmission method according to one embodiment of the present disclosure;

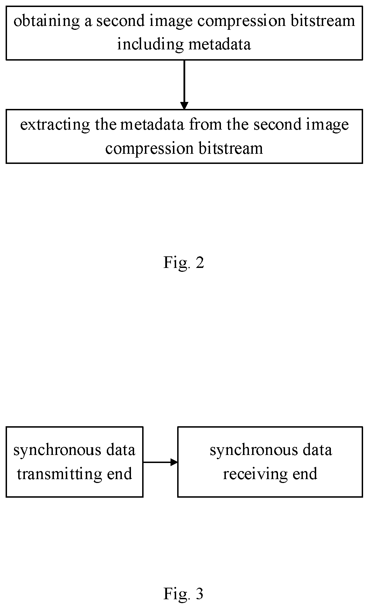

Fig.2 is a flow chart of a data parsing method according to one embodiment of the present disclosure; and
Fig.3 is a schematic view showing a data transmission system according to one embodiment of the present disclosure.

### DETAILED DESCRIPTION

In order to make the objects, the technical solutions and the advantages of the present disclosure more apparent, the present disclosure will be described hereinafter in a clear and complete manner in conjunction with the drawings and embodiments.

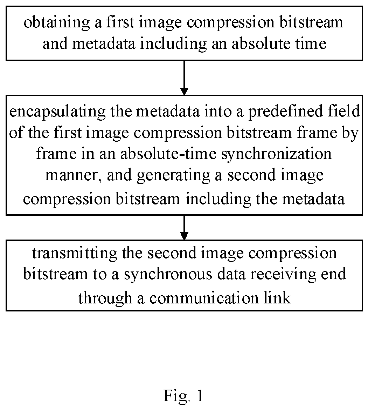

As shown in Fig. 1, the present disclosure provides in some embodiments a data transmission method for a synchronous data transmission end, which includes: obtaining a first image compression bitstream and metadata including an absolute time; encapsulating the metadata into a predefined field of the first image compression bitstream frame by frame in an absolute-time synchronization manner, and generating a second image compression bitstream including the metadata; and transmitting the second image compression bitstream to a synchronous data receiving end through a communication link. In the case that a communication transport protocol is H264 or H265, the predefined field is an SEI field, and in the case that the communication transport protocol is a Transport Stream (TS) encapsulation protocol, the predefined field is a custom field. The type of the metadata depends on a type of a device with a sensor. For example, when the device is a boat, the metadata includes device state data, e.g., GNSS data, wind direction or course. When the device is an aircraft, the metadata at least includes aircraft Position and Orientation System (POS) data, aircraft state, load sensor type, pod POS data, pod state and image processing board data. When a sensor is a fixed camera, the metadata includes positioning, viewing direction, pitch angle, field angle, height of pole, channel, transmission bandwidth, device Identity Document (ID), etc. The aircraft POS data at least includes yaw angle, pitch angle, roll angle, longitude and latitude, height, distance from a starting point, azimuth relative to the starting point, and velocity. The pod POS data at least includes horizontal field angle in visible light, vertical field angle in visible light, horizontal field angle in infrared light, vertical field angle in infrared light, camera focal length, course angle of the pod, pitch Euler angle of the pod, course frame angle, pitch frame angle, roll frame angle, longitude, latitude and height of an object, velocity of the object, velocity azimuth of the object, and estimated distance between the object and the aircraft.

The obtaining the first image compression bitstream and the metadata including the absolute time includes: outputting a first control signal for collecting the first image compression bitstream and a second control signal for collecting the metadata through a same reference clock circuit, the first control signal and the second control signal having a same reference clock; and obtaining the first image compression bitstream and the metadata including the absolute time in accordance with the first control signal and the second control signal. In the embodiments of the present disclosure, reference clock signals from a same reference clock circuit are taken as the first control signal and the second control signal, and timestamps in the first image compression bitstream and the metadata are set with reference to a same clock source, so the timestamps are considered as absolute times relative to each other in a system including the same clock source. In addition, a method for generating the first control signal and the second control signal will not be particularly defined herein. In the case of different types of devices, the methods for generating the control signals are different. For example, in the case that the device is an aircraft, upon the receipt of an instruction from a ground station, a load processing sub-unit of the aircraft outputs the first control signal and the second control signal through a same reference clock circuit. In the case that the device is a vehicle, upon the receipt of an instruction issued by a cloud, a controller of the vehicle outputs the first control signal and the second control signal through a same reference clock circuit. In a word, in the embodiments of the present disclosure, the first control signal and the second control signal are generated through a same reference clock circuit, but a specific generation method will not be particularly defined herein.

The encapsulating the metadata into the predefined field of the first image compression bitstream frame by frame in an absolute-time synchronization manner includes: in the case that a collection frequency of the metadata is the same as a frame rate of the first image compression bitstream, encapsulating the metadata frame by frame into an image frame of the first image compression bitstream having a same absolute time as the metadata; and in the case that the collection frequency of the metadata is different from the frame rate of the first image compression bitstream, encapsulating the metadata frame by frame into an image frame of the first image compression bitstream having an absolute time closest to the metadata. In order to ensure the synchronization between the two types of data, the collection frequency of a data collection unit for collecting the metadata is preset with reference with the frame rate of the image compression bitstream. To be specific, the collection frequency of the data collection unit is the same as, or a multiple of, the frame rate of the image compression bitstream.

It is found that, when the above-mentioned data transmission method is used to collect, transmit and parse data under the protocol H264/H265, sometimes it is impossible for the receiving end to accurately parse a part of image frames. Control tests show that, a start code of a H264/H265 image frame is 0x000x000x000x01 or 0x000x000x01, and this field also probably occurs in the metadata. Hence, in the case that the metadata is not compressed, the receiving end may erroneously identify a field in the metadata as the start code of the image frame, and thereby a parsing conflict or failure may occur. Through compression, it is able to remove redundant data, e.g., a field including consecutive "0x00", thereby to prevent the occurrence of any conflict. In addition, through compression, it is able to reduce a data volume of the metadata, thereby to save a bandwidth.

The present disclosure further provides in some embodiments a data parsing method for a synchronous data receiving end, which includes: obtaining a second image compression bitstream including metadata, the second image compression bitstream being generated through the above-mentioned data transmission method; and extracting the metadata from the second image compression bitstream.

The extracting the metadata from the second image compression bitstream includes: parsing the second image compression bitstream into a plurality of image frames including the metadata in accordance with a frame start field; and extracting the metadata included in the image frames in accordance with the frame start field, and obtaining the second image compression bitstream including the image frames or a first image compression bitstream not including the metadata.

The data parsing method further includes: subsequent to extracting the metadata from the second image compression bitstream, playing a video in accordance with the first image compression bitstream or the second image compression bitstream, and performing a drawing or processing operation in accordance with information in the metadata; or transmitting the first image compression bitstream and the metadata to a data processing unit. During the transmission, the first image compression bitstream synchronizes with the metadata, and the receiving end extracts the metadata from the predefined field of the first image compression bitstream without any damage to the first image compression bitstream, so it is able to ensure the purity of the two types of data as well as the independence therebetween. Hence, the method in the embodiments of the present disclosure may be applied to various application scenarios. For example, based on the synchronization between the first image compression bitstream and the metadata, a reliable dynamic map including various information elements is drawn. The information elements include height information, position information, time information and course information, and the information elements are obtained through parsing the metadata. Due to the synchronization between the first image compression bitstream and the metadata, it is able to ensure the reliability of the information elements corresponding to each image frame collected by the UAV Based on the purity of the two types of data and the independence therebetween, the first image compression bitstream and the metadata collected by the UAV are transmitted to a backend image stitching unit, so as to accurately determine a boundary of an image in accordance with the metadata having a same absolute time as the image frame, thereby to stitch the images accurately. In addition, the two types of data are independent of each other, so the stitched image is a pure image not including any information elements.

For ease of understanding, the following description will be given when a device is a UAV, i.e., a synchronous data transmitting end, and a ground station serves as a synchronous data parsing end. Upon the receipt of an instruction from the ground station, a load processing sub-unit of the UAV outputs the first control signal and the second control signal through a same reference clock circuit. A pod of the UAV collects an image in accordance with the first control signal and generates the first image compression bitstream. A data collection unit of the UAV collects measurement data in accordance with the second control signal to generate the metadata. The data collection unit may be an Inertial Measurement Unit (IMU) or a laser ranging unit. The load processing sub-unit encapsulates the metadata into the predefined field of the first image compression bitstream frame by frame in an absolute-time synchronization manner, generates the second image compression bitstream including the metadata, and transmits the second image compression bitstream to the ground station through a downlink. The ground station splits the second image compression bitstream into a plurality of image frames including the metadata in accordance with a frame start field, and extracts the metadata in all the image frames in accordance with a frame header type, so as to generate the first image compression bitstream consisting of all the image frames not including the metadata.

According to the embodiments of the present disclosure, the metadata is encapsulated into the predefined field of the first image compression bitstream frame by frame in an absolute-time synchronization manner, so as to transmit the two types of data synchronously. In addition, through the encapsulation, the receiving end extracts the metadata from the predefined field of the first image compression bitstream without any damage to the first image compression bitstream, so it is able to ensure the purity of the two types of data as well as the independence therebetween.

The present disclosure further provides in some embodiments a data transmission system, which includes: a synchronous data transmitting end configured to generate and transmit the second image compression bitstream through the above-mentioned data transmission method; and a synchronous data receiving end configured to parse the second image compression bitstream.

The data transmission method, the data parsing method and the data transmission system have been described hereinabove in details. The above embodiments have been described in a progressive manner, and the same or similar contents in the embodiments have not been repeated, i.e., each embodiment has merely focused on the difference from the others. Especially, the device embodiments are substantially similar to the method embodiments, and thus have been described in a simple manner. It should be appreciated that, a person skilled in the art may make further modifications and improvements without departing from the spirit of the present disclosure, and these modifications and improvements shall also fall within the scope of the present disclosure.

It should be further appreciated that, the units and algorithm steps described herein may be implemented as electronic hardware, computer software or both. In order to clearly explain the interchangeability of hardware and software, the general description about functions of the illustrative units and steps has been given. Whether these functions are implemented as software or hardware depends on a specific application and an entire system design constraint. The functions may be achieved in various ways with respect to a specific application, but the implementation shall not be construed as departing from the scope of the present disclosure.

The steps in the method or algorithm described herein may be directly included in hardware, a software module executed by a processor, or both. The software module may reside in a Random Access Memory (RAM), a flash memory, a Read-Only Memory (ROM), an Electrically Programmable ROM (EPROM), an Electrically Erasable PROM (EEPROM), a register, a hard disc, a mobile disc, a Compact Disc-ROM (CD-ROM), or any other storage medium known in the art.

## Claims

1. A data transmission method for a synchronous data transmitting end, comprising:
obtaining a first image compression bitstream and metadata comprising an absolute time;
encapsulating the metadata into a predefined field of the first image compression bitstream frame by frame in an absolute-time synchronization manner, and generating a second image compression bitstream comprising the metadata; and
transmitting the second image compression bitstream to a synchronous data receiving end through a communication link.

2. The data transmission method according to claim 1, wherein the obtaining the first image compression bitstream and the metadata comprising the absolute time comprises:
outputting a first control signal for collecting the first image compression bitstream and a second control signal for collecting the metadata through a same reference clock circuit, the first control signal and the second control signal having a same reference clock; and
obtaining the first image compression bitstream and the metadata comprising the absolute time in accordance with the first control signal and the second control signal.

3. The data transmission method according to claim 1, wherein the encapsulating the metadata into the predefined field of the first image compression bitstream frame by frame in an absolute-time synchronization manner comprises:
in the case that a collection frequency of the metadata is the same as a frame rate of the first image compression bitstream, encapsulating the metadata frame by frame into an image frame of the first image compression bitstream having a same absolute time as the metadata; and
in the case that the collection frequency of the metadata is different from the frame rate of the first image compression bitstream, encapsulating the metadata frame by frame into an image frame of the first image compression bitstream having an absolute time closest to the metadata.

4. The data transmission method according to claim 1, further comprising, prior to encapsulating the metadata into the predefined field of the first image compression bitstream frame by frame in an absolute-time synchronization manner, compressing the metadata.

5. The data transmission method according to claim 1, wherein the metadata at least comprises Global Navigation Satellite System (GNSS) positioning data.

6. The data transmission method according to claim 1, wherein the predefined field is a Supplemental Enhancement Information (SEI) field.

7. A data parsing method for a synchronous data receiving end, comprising:
obtaining a second image compression bitstream comprising metadata, the second image compression bitstream being generated through the data transmission method according to any one of claims 1 to 6; and
extracting the metadata from the second image compression bitstream.

8. The data parsing method according to claim 7, wherein the extracting the metadata from the second image compression bitstream comprises:
parsing the second image compression bitstream into a plurality of image frames comprising the metadata in accordance with a frame start field; and
extracting the metadata comprised in the image frames in accordance with the frame start field, and obtaining the second image compression bitstream comprising the image frames or a first image compression bitstream not comprising the metadata.

9. The data parsing method according to claim 8, further comprising:
subsequent to extracting the metadata from the second image compression bitstream, playing a video in accordance with the first image compression bitstream or the second image compression bitstream, and performing a drawing or processing operation in accordance with information in the metadata; or
transmitting the first image compression bitstream and the metadata to a data processing unit.

10. A data transmission system, comprising:
a synchronous data transmitting end configured to generate and transmit the second image compression bitstream through the data transmission method according to any one of claims 1 to 6; and
a synchronous data receiving end configured to parse the second image compression bitstream.
